# EUROPÄISCHE PATENTSCHRIFT

(11) **EP 2 924 327 B1**
(45) Veröffentlichungstag und Bekanntmachung des Hinweises auf die Patenterteilung: **03.04.2019**
(21) Anmeldenummer: 14001156.0
(22) Anmeldetag: 28.03.2014
(51) Int. Cl.: F16K 11/044, F16K 1/36

(54) **Mehrwegeventil**
Multi-port valve
Vanne multi-voies

(43) Veröffentlichungstag der Anmeldung: 30.09.2015
(73) Patentinhaber: FESTO AG & Co. KG, 73734 Esslingen (DE)
(72) Erfinder: Usinger, Eduard, 73728 Esslingen (DE)
(74) Vertreter: Patentanwälte Magenbauer & Kollegen Partnerschaft mbB

(56) Entgegenhaltungen:
- DE-A1- 1 750 380
- US-A- 2 893 687
- US-A- 2 976 010
- US-A1- 2007 164 243
- US-A1- 2009 126 801

## Beschreibung

Die Erfindung betrifft ein Mehrwegeventil, mit einem Ventilgehäuse, in dem eine Ventilkammer ausgebildet ist, in der ein Ventilglied unter Ausführung einer Schaltbewegung axial bewegbar angeordnet ist, das über einen eine periphere Außenumfangsfläche aufweisenden Hauptkörper verfügt, der mindestens einen elastisch verformbaren, bezüglich der Außenumfangsfläche radial vorstehenden ringförmigen Dichtteller trägt, der zwei einander entgegengesetzte axiale Stirnflächen aufweist, wobei wenigstens einer dieser axialen Stirnflächen ein bezüglich des Ventilgehäuses abgestützter ringförmiger Ventilsitz axial gegenüberliegt, der eine zwei Ventilkammerabschnitte der Ventilkammer verbindende Überströmöffnung umrahmt und an dem der Dichtteller unter Einnahme einer die Überströmöffnung absperrenden Schließstellung mit einer seiner beiden Stirnflächen anliegen kann, wobei der Dichtteller an seiner radialen Außenumfangsfläche koaxial von einem die Verformung des Dichttellers begrenzenden Stützring umschlossen ist, der ausschließlich an dem Dichtteller fixiert ist.

Ein aus der DE 20 38 846 A bekanntes Mehrwegeventil verfügt über ein Ventilglied mit einem länglichen Hauptkörper, der in einer Ventilkammer einen ringförmigen, aus Material mit gummielastischen Eigenschaften bestehenden Dichtteller trägt. Der Dichtteller hat zwei einander entgegengesetzte axiale Stirnflächen, die als Dichtflächen fungieren und abwechselnd mit den Dichtteller axial flankierenden, am Ventilgehäuse des Mehrwegeventils ausgebildeten ringförmigen Ventilsitzen zusammenwirken. Jeder Ventilsitz umrahmt eine Überströmöffnung, die einen mittleren Ventilkammerabschnitt, in dem sich der Dichtteller befindet, mit jeweils einem von zwei äußeren Ventilkammerabschnitten verbindet, wobei jeder Ventilkammerabschnitt mit einem das Ventilgehäuse durchsetzenden Ventilkanal kommuniziert. Das Ventilglied ist axial bewegbar, um den Dichtteller abwechselnd an die beiden Ventilsitze anzulegen und dadurch die von den Ventilsitzen umrahmten Überströmöffnungen abwechselnd abzusperren oder für einen Fluiddurchtritt freizugeben.

Im Betrieb des bekannten Mehrwegeventils steht der eine der beiden äußeren Ventilkammerabschnitte mit einer ein Druckmedium zur Verfügung stellenden Druckquelle in Verbindung. Je nach Schaltstellung des Ventilgliedes kann das Druckmedium durch die zugeordnete Überströmöffnung hindurch in den mit einem Verbraucher verbundenen mittleren Ventilkammerabschnitt überströmen oder ist, wenn der Dichtteller unter Einnahme einer Schließstellung am zugeordneten Ventilsitz anliegt, an einem solchen Fluidübertritt gehindert. Letzteres ist ein Zustand, bei dem auf den Dichtteller von der Seite der äußeren Ventilkammer her eine hohe fluidische Druckkraft einwirkt, die zur Folge haben kann, dass sich der Dichtteller verformt, was eine Leckage zur Folge haben kann.

Vergleichbare Probleme treten bei den Mehrwegeventilen auf, die in der DE 23 27 320 A, WO 2009/003500 A1, DE 79 24 113 U1 und DE 25 09 716 A1 beschrieben sind.

Eine Möglichkeit zur Vermeidung einer Verformung des Dichttellers bestünde prinzipiell darin, den Dichtteller an der dem Ventilsitz abgewandten Stirnseite mechanisch abzustützen. Entsprechende Abstützmaßnahmen offenbaren beispielsweise die DE 20 38 846 A und die DE 23 27 320 A im Zusammenhang mit zwei äußeren, beabstandet zu dem Dichtteller am Hauptkörper des Ventilgliedes angeordneten Dichtelementen. Damit verbunden ist jedoch eine sich nachteilig auf die Herstellungskosten auswirkende spezielle Formgebung des Hauptkörpers und auch die Montagemöglichkeiten des Dichttellers werden beeinträchtigt. Ferner würde bei einer solchen Ausgestaltung nur eine der beiden axialen Stirnflächen des Dichttellers als zur Kooperation mit einem Ventilsitz geeignete Dichtfläche zur Verfügung stehen, was die Variabilität bei der Konstruktion des Mehrwegeventils beeinträchtigen würde.

Ein aus der US 2007/164243 A1 bekanntes Mehrwegeventil der eingangs genannten Art verfügt über ein Ventilglied, das eine ringförmige, beispielsweise als O-Ring ausgebildete Ventildichtung aufweist, die von einem ringförmigen Stützkörper umschlossen ist, der einen U-förmigen Querschnitt hat.

Der Erfindung liegt die Aufgabe zugrunde, ein Mehrwegeventil zu schaffen, das bei kostengünstigem Aufbau eine zuverlässige Abdichtung gewährleistet, wenn das Ventilglied eine an einem Ventilsitz anliegende Schließstellung einnimmt.

Zur Lösung dieser Aufgabe ist in Verbindung mit den eingangs genannten Merkmalen vorgesehen, dass der Ringkörper des Dichttellers im Querschnitt betrachtet eine blockförmige Gestalt mit rechteckiger Querschnittsprofilierung aufweist, wobei an der radialen Außenumfangsfläche des Dichttellers mindestens eine ringförmige Haltenut ausgebildet ist, in die ein am Stützring ausgebildeter ringförmiger Haltevorsprung formschlüssig eingreift.

Der Dichtteller und der den Dichtteller peripher umschließende starre Stützring bilden eine zusammenhaltende Baueinheit oder Baugruppe, die sich bei der Schaltbewegung des Ventilgliedes einheitlich mitbewegt. Der Stützring wirkt wie ein Gurt und verhindert ein radiales Aufweiten des Dichttellers, sodass er die Formgebung des an sich elastisch verformbaren Dichttellers stabilisiert. Der Dichtteller selbst besteht aus einem elastisch verformbaren Material, vorzugsweise aus einem Elastomermaterial, sodass er bei Einnahme einer Schließstellung mittels einer seiner beiden axialen Stirnflächen unter zuverlässiger Abdichtung an einem axial gegenüberliegenden ringförmigen Ventilsitz anliegen kann. Dieser Ventilsitz stützt sich am Ventilgehäuse ab, wobei er insbesondere ortsfest bezüglich des Ventilgehäuses angeordnet ist. Der Ventilsitz kann beispielsweise ein einstückiger Bestandteil des Gehäuses oder auch ein Bestandteil eines in das Ventilgehäuse eingesetzten Hülsenkörpers oder Ringkörpers sein. Ist der Dichtteller in einer Schließstellung mit einer hohen resultierenden Fluidkraft aus der Richtung des mit ihm zusammenwirkenden Ventilsitzes beaufschlagt, verhindert der Stützring aufgrund seiner Stabilisierungsfunktion ein partielles Wegdrücken des Dichttellers vom Ventilsitz und sorgt für einen dauerhaft zuverlässigen Dichtkontakt zwischen dem Dichtteller und dem Ventilsitz. Außerdem sorgt der Stützring für einen zuverlässigen Halt des Dichttellers am Hauptkörper des Ventilgliedes und verhindert ein radiales "Aufblasen" oder Aufweiten des Dichttellers, sodass einem Unterwandern des Dichttellers durch das Druckmedium entgegengewirkt wird. Die Platzierung des Stützrings am Außenumfang des Dichttellers und die ausschließliche Fixierung des Stützrings an dem Dichtteller unter Vermeidung eines Kontakts zum Hauptkörper des Ventilgliedes begünstigt überdies die Variabilität des Einsatzes des Dichttellers und erlaubt es, bei Bedarf nicht nur eine, sondern beide Stirnflächen des Dichttellers als mit jeweils einem gegenüberliegenden Ventilsitz axial kooperierende Dichtflächen zu nutzen.

Der Stützring ist mit einer zumindest in der axialen Richtung des Dichttellers wirksamen Formschlussmaßnahme an dem Dichtteller fixiert. Dadurch wird die Stützfunktion in jedem Verformungszustand des Dichttellers gewährleistet. Der Stützring verbleibt stets an einer vorbestimmten Stelle am Dichtteller fixiert. Durch die Formschlussmaßnahme ist der Stützring mit zumindest einem Teil seines Querschnittes radial versenkt im Dichtteller aufgenommen. Hierzu ist am radialen Außenumfang des Dichttellers eine nach radial außen hin offene konzentrische Haltenut ausgebildet, während am radialen Innenumfang des Stützringes ein diesbezüglich konzentrischer ringförmiger Haltevorsprung angeformt ist, der formschlüssig und vorzugsweise auch kraftschlüssig in die Haltenut des Dichttellers eingreift. Sowohl die Haltenut als auch der Haltevorsprung sind zweckmäßigerweise ringförmig in sich geschlossen ausgebildet, könnten aber auch in der Umfangsrichtung unterbrochen bzw. segmentiert sein. Es können auch mehr als eine Haltenut und mehr als ein Haltevorsprung vorhanden sein.

Vorteilhafte Weiterbildungen der Erfindung gehen aus den Unteransprüchen hervor.

Der Stützring sollte in seiner Umfangsrichtung, also um seine Längsachse herum, eine hohe Zugfestigkeit aufweisen, sodass er bei den im Betrieb auf ihn einwirkenden Kräften keine Dehnung erfährt. Vorzugsweise ist er insgesamt starr ausgebildet.

Ein zweckmäßiger Aufbau des Mehrwegeventils sieht vor, dass der auf der Seite des Dichttellers liegende Ventilkammerabschnitt mit einem mit einem Verbraucher verbindbaren Arbeitskanal des Mehrwegeventils kommuniziert, während der auf der axial entgegengesetzten Seite liegende Ventilkammerabschnitt mit einem mit einer externen Druckquelle verbindbaren Speisekanal des Mehrwegeventils kommuniziert. Eine solche Ausgestaltung ermöglicht insbesondere die Nutzung des Mehrwegeventils als 2/2-Wegeventil, mit dessen Hilfe eine Fluidverbindung zwischen einer Druckquelle und einem an einen Arbeitskanal angeschlossenen Verbraucher wahlweise freigegeben oder abgesperrt werden kann.

Als besonders vorteilhaft erweist sich die erfindungsgemäße Ausgestaltung in Verbindung mit einem Mehrwegeventil, bei dem der Dichtteller axial beweglich zwischen zwei ihm jeweils axial zugewandten ringförmigen Ventilsitzen angeordnet ist. Jeder dieser dem Ventilgehäuse zugeordneten Ventilsitze umrahmt eine Überströmöffnung, die einen mittleren Ventilkammerabschnitt der Ventilkammer mit einem von zwei äußeren Ventilkammerabschnitten verbindet. Der mittlere Ventilkammerabschnitt ist also quasi in axialer Richtung auf einander entgegengesetzten Seiten von zwei äußeren Ventilkammerabschnitten flankiert, die jeweils über eine von einem Ventilsitz umrahmte Überströmöffnung hindurch mit dem mittleren Ventilkammerabschnitt verbunden sind. Der Dichtteller kann im Rahmen der Schaltbewegung des Ventilgliedes abwechselnd in einer am einen Ventilsitz anliegenden Schließstellung oder in einer am anderen Ventilsitz anliegenden Schließstellung positioniert werden, sodass er die jeweils zugeordnete Überströmöffnung absperrt. Gleichzeitig ist er dabei vom jeweils anderen Ventilsitz abgehoben und gibt die zugeordnete Überströmöffnung für einen Fluiddurchtritt frei.

Eine solche Ausgestaltung eignet sich vorteilhaft für eine Anwendung, bei der der mittlere Ventilkammerabschnitt mit einem zu einem Verbraucher führenden Arbeitskanal des Mehrwegeventils kommuniziert, während einer der beiden äußeren Ventilkammerabschnitte mit einem mit einer Druckquelle verbindbaren Speisekanal und der andere äußere Ventilkammerabschnitt mit einem mit einer Drucksenke verbundenen Entlastungskanal kommuniziert. Bevorzugt wird das Mehrwegeventil mit Druckluft als Druckmedium betrieben, sodass die Druckquelle eine Druckluftquelle ist und der Entlastungskanal einen Entlüftungskanal bildet, der mit der Atmosphäre als Drucksenke kommuniziert. Ein solches Mehrwegeventil lässt sich vorteilhaft als 3/2-Wegeventil betreiben oder - sofern entsprechende weitere Anschlüsse vorhanden sind - als 4/2-Wegeventil oder als 5/2-Wegeventil.

Der ringförmige Dichtteller ist zweckmäßigerweise in einer nach radial außen hin offenen Ringnut des Hauptkörpers des Ventilgliedes gehalten. Vorzugsweise sitzt der Dichtteller dabei unter radialer Vorspannung in der Ringnut des Hauptkörpers ein. Die Montage des Dichttellers am Hauptkörper erfolgt dabei zweckmäßigerweise vor dem Anbringen des Stützringes, sodass sich der noch nicht abgestützte Dichtteller zum Einsetzen in die Ringnut elastisch aufweiten lässt. Anschließend wird dann der Stützring am Außenumfang des Dichttellers angebracht, um Letzteren in seiner Formgebung und Lage zu stabilisieren.

Der Dichtteller ist also zweckmäßigerweise sowohl formschlüssig als auch kraftschlüssig am Hauptkörper des Ventilgliedes fixiert.

Zweckmäßigerweise besteht der Dichtteller aus einem Material mit gummielastischen Eigenschaften, insbesondere aus einem Elastomermaterial, wobei man allerdings eine angemessene Materialhärte wählt, um auch schon ohne den Stützring eine zur Erfüllung der Dichtfunktion ausreichende Strukturfestigkeit zu gewährleisten.

Der Stützring besteht zweckmäßigerweise aus einem Kunststoffmaterial oder aus Metall. Bevorzugt ist der Stützring in seiner Umfangsrichtung rings um den Hauptkörper herum in sich geschlossen und ununterbrochen. Dabei kann es sich bei ihm um einen von Hause aus in sich geschlossenen Ringkörper handeln oder auch um einen zu Gunsten einer vereinfachten Montage ursprünglich geschlitzten Ringkörper, der spätestens nach der Montage in dem Trennbereich geschlossen wird, beispielsweise durch Verschweißen, Verstemmen, Nieten, Löten usw.

Es wird als besonders zweckmäßig angesehen, den Stützring und den Dichtteller derart geometrisch aufeinander abzustimmen, dass der Dichtteller von dem Stützring an keiner seiner beiden axialen Stirnseiten axial überragt wird. In diesem Zusammenhang ist es besonders vorteilhaft, wenn der Stützring zumindest an derjenigen seiner beiden axialen Stirnseiten, die einem mit dem Dichtteller kooperierenden Ventilsitz zugewandt ist, bezüglich der auf der gleichen Seite liegenden Stirnfläche des Dichttellers zurückversetzt ist, sodass er vom Dichtteller axial überragt wird. Bevorzugt gilt dies für beide axiale Seiten des Dichttellers und Stützringes. Damit ist der Vorteil verbunden, dass in der Schließstellung des Dichttellers ein eventuelles Eindrücken des Ventilsitzes in das elastische Material des Dichttellers nicht behindert wird. Ein solches Eindrücken tritt in der Regel stets auf, wenn der Ventilsitz, was vorteilhaft ist, dem Dichtteller entgegenragt, wobei der Ventilsitz insbesondere kragenartig ausgebildet ist.

Insbesondere mit der gleichen Begründung ist es vorteilhaft, wenn der Stützring so ausgebildet und angeordnet ist, dass er keine der beiden axialen Stirnflächen des Dichttellers bedeckt, so dass die axialen Stirnflächen des Dichttellers von dem Stützring gänzlich unbedeckt beziehungsweise unabgedeckt sind.

Vorzugsweise ist der Stützring ausschließlich im Bereich der radialen Außenumfangsfläche des Dichttellers am Dichtteller befestigt. Wenn der Stützring lediglich an der radialen Außenumfangsfläche des Dichttellers fixiert ist, stehen insbesondere die axialen Stirnflächen des Dichttellers uneingeschränkt zur Nutzung als mit einem Ventilsitz kooperierende Dichtflächen zur Verfügung.

Die Formschlusswirkung ist zweckmäßigerweise mit einer kraftschlüssigen Fixierung kombiniert, die sich beispielsweise dadurch ergibt, dass der Stützring mit radialer Vorspannung koaxial auf den Dichtteller aufgesetzt ist.

Für die Haltenut empfiehlt sich ein sich zum Nutgrund hin verjüngendes Querschnittsprofil, wobei auch für den Haltevorsprung zweckmäßigerweise ein sich zu seinem radialen freien Endbereich hin verjüngendes Querschnittsprofil bevorzugt wird. Beide Querschnittsprofile haben zweckmäßigerweise eine abgerundete Kontur, was das Aufbringen des Stützringes auf den Dichtteller begünstigt. Der Stützring kann axial auf den sich dabei kurzzeitig radial verformenden Dichtteller aufgeschoben werden, sodass der Haltevorsprung in die Haltenut einschnappt. Haltenut und Haltevorsprung sind bevorzugt komplementär zueinander ausgebildet.

Für den Ringkörper des ringförmigen Dichttellers empfiehlt sich im Querschnitt betrachtet eine blockförmige Gestalt, insbesondere eine rechteckige und bevorzugt quadratische Querschnittsprofilierung, die lediglich durch gegebenenfalls vorhandene, der formschlüssigen Fixierung des Stützringes dienende Profilierungen unterbrochen oder überlagert sein kann.

Bei dem Mehrwegeventil handelt es sich vorzugsweise um ein Ventil, das zur Steuerung eines gasförmigen Druckmediums und insbesondere zur Steuerung von Druckluft eingesetzt wird. Es eignet sich aber gleichermaßen zur Steuerung von Flüssigkeiten.

Das Mehrwegeventil ist zweckmäßigerweise von elektrisch betätigbarer Bauart. Hierzu enthält es eine elektrisch betätigbare Antriebseinrichtung zum Hervorrufen der Schaltbewegung des Ventilgliedes. Bei einer möglichen Ausführungsform wirkt diese elektrisch betätigbare Antriebseinrichtung direkt auf das Ventilglied ein. Bevorzugt wird allerdings eine elektro-fluidisch und insbesondere elektro-pneumatisch vorgesteuerte Ausführungsform, bei der die elektrisch betätigbare Antriebseinrichtung eine elektrisch betätigbare Vorsteuerventileinrichtung ist, beispielsweise eine Magnetventileinrichtung oder eine Piezoventileinrichtung. Mit ihr lässt sich die Fluidbeaufschlagung des Ventilgliedes mittels eines Antriebsfluides steuern, um die Schaltbewegung durch Fluidbeaufschlagung hervorzurufen.

Je nach Ausgestaltung des Mehrwegeventils kann das Ventilglied mit nur einem Dichtteller oder mit mehreren Dichttellern bestückt sein. Ist das Ventilglied mit mehreren Dichttellern bestückt, können alle oder eine beliebige Auswahl der Dichtteller mit einem Stützring versehen sein. Tritt an einem Dichtteller aufgrund der Betriebsweise des Mehrwegeventils die geschilderte Problematik einer ungleichen Druckbeaufschlagung nicht auf, kann bei ihm der Stützring weggelassen werden.

Nachfolgend wird die Erfindung anhand der beiliegenden Zeichnung näher erläutert. In dieser zeigen:
- Figur 1: eine bevorzugt Ausführungsform des erfindungsgemäßen Mehrwegeventils in einem Längsschnitt,
- Figur 2: den in Figur 1 strichpunktiert umrahmten Ausschnitt II in einer vergrößerten Darstellung, und

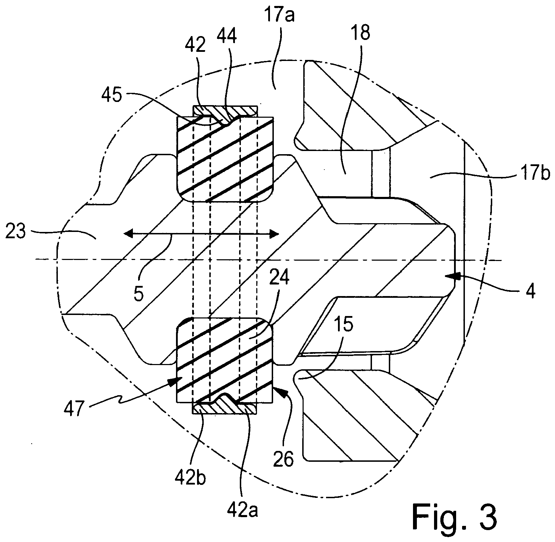

- Figur 3: den sich auf den Dichtteller und einen Ventilsitz konzentrierenden Bereich des Ausschnittes der Figur 2 in einem Zustand, in dem durch entsprechende Positionierung des Ventilgliedes der Dichtteller von jedem ihm zugeordneten Ventilsitz abgehoben ist.

Das in seiner Gesamtheit mit Bezugsziffer 1 bezeichnete Mehrwegeventil enthält ein in einer Ventilkammer 2 eines Ventilgehäuses 3 linear bewegbar angeordneten Ventilglied 4. Die mögliche Bewegung des Ventilgliedes 4 sei im Folgenden auch als Schaltbewegung 5 bezeichnet und ist in der Zeichnung durch einen Doppelpfeil illustriert.

Zur Erzeugung der Schaltbewegung 5 ist das Mehrwegeventil 1 mit einer Antriebseinrichtung 6 ausgestattet, die bevorzugt vom elektrisch betätigbaren Typ ist. Elektrische Kontaktmittel 7 der Antriebseinrichtung 6 erlauben die Zufuhr elektrischer Betätigungssignale zur bedarfsgemäßen Betätigung der Antriebseinrichtung 6, die dann wiederum das Ventilglied 4 entsprechend positioniert.

Das Mehrwegeventil 1 ist zweckmäßigerweise von elektro-fluidisch vorgesteuerter Bauart. In diesem Zusammenhang ist das Ventilglied 4 Bestandteil eines fluidisch betätigbaren Hauptventils 8 des Mehrwegeventils 1, während die Antriebseinrichtung 6 als eine mit dem Hauptventil 8 zu einer Baugruppe zusammengefasste elektrisch betätigbare Vorsteuerventileinrichtung 12 ausgeführt ist. Letztere ist in der Lage, eine durch ein Antriebsfluid verursachte Fluidbeaufschlagung des zu dem Hauptventil 8 gehörenden Ventilgliedes 4 zu steuern, um eine durch Fluidkraft hervorgerufene Schaltbewegung 5 des Ventilgliedes 4 zu bewirken.

Die Ventilkammer 2 hat eine längliche Gestalt mit einer Längsachse 13. Das zumindest partiell und bevorzugt in seiner Gesamtheit in dieser Ventilkammer 2 angeordnete Ventilglied 4 hat eine mit der Längsachse 13 der Ventilkammer 2 zusammenfallende Längsachse 14 und hat insbesondere auch eine längliche Gestalt. Die Längsrichtungen der beiden Längsachsen 13, 14 seien im Folgenden auch als axiale Richtungen bezeichnet.

In der Ventilkammer 2 befinden sich zwei zu der Längsachse 13 konzentrische erste und zweite ringförmige Ventilsitze 15, 16. Diese beiden Ventilsitze 15, 16 sind in der axialen Richtung beabstandet zueinander angeordnet, wobei sie einander zugewandt sind. Durch diese beiden ringförmigen Ventilsitze 15, 16 wird die Ventilkammer 2 in drei axial aufeinanderfolgende Ventilkammerabschnitte unterteilt, und zwar in einen zwischen den beiden ringförmigen Ventilsitzen 15, 16 liegenden mittleren Ventilkammerabschnitt 17a und zwei äußere Ventilkammerabschnitte 17b, 17c, die im Folgenden zur besseren Unterscheidung auch als erster äußerer Ventilkammerabschnitt 17b und als zweiter äußerer Ventilkammerabschnitt 17c bezeichnet werden. Der erste Ventilsitz 15 liegt zwischen dem mittleren Ventilkammerabschnitt 17a und dem ersten äußeren Ventilkammerabschnitt 17b. Der zweite Ventilsitz 16 liegt zwischen dem mittleren Ventilkammerabschnitt 17a und dem zweiten äußeren Ventilkammerabschnitt 17c.

Während der erste ringförmige Ventilsitz 15 eine erste Überströmöffnung 18 umrahmt, die den mittleren Ventilkammerabschnitt 17a mit dem ersten äußeren Ventilkammerabschnitt 17b verbindet, umrahmt der zweite ringförmige Ventilsitz 16 eine zweite Überströmöffnung 19, die den mittleren Ventilkammerabschnitt 17a mit dem zweiten äußeren Ventilkammerabschnitt 17c verbindet.

In jeden der drei Ventilkammerabschnitte 17a, 17b, 17c mündet einer von drei Ventilkanälen 22, die das Ventilgehäuse 3 durchsetzen und andernends jeweils zu einer Außenfläche des Ventilgehäuses 3 ausmünden. Der in den ersten äußeren Ventilkammerabschnitt 17b einmündende Ventilkanal 22 ist ein Speisekanal 22a, der im Betrieb des Mehrwegeventils 1 mit einer nicht weiter abgebildeten externen Druckquelle verbunden ist, insbesondere mit einer Druckluftquelle. Der in den mittleren Ventilkammerabschnitt 17a einmündende Ventilkanal 22 ist ein Arbeitskanal 22b, der ausgebildet ist, um im Betrieb des Mehrwegeventils 1 mit einem zu betätigenden Verbraucher verbunden zu werden. Sowohl der Speisekanal 22a als auch der Arbeitskanal 22b münden mit einer Anschlussöffnung an der Außenfläche des Ventilgehäuses 3 aus, der Befestigungsmittel zugeordnet sind, um eine zur Druckquelle beziehungsweise zum Verbraucher führende Fluidleitung insbesondere lösbar anschließen zu können.

Der mit dem zweiten äußeren Ventilkammerabschnitt 17c verbundene Ventilkanal 22 ist ein ständig mit einer Drucksenke und dabei insbesondere mit der Atmosphäre verbundener Entlastungskanal 22c, der als Entlüftungskanal bezeichnet werden kann, wenn es sich bei dem durch das Mehrwegeventil zu steuernde Druckmedium um Druckluft handelt.

Der Entlüftungskanal 22c kann über eine zur Außenfläche des Ventilgehäuses 3 offene Ausmündung direkt mit der Atmosphäre kommunizieren. Er kann dort auch mit Befestigungsmitteln ausgestattet sein, die beispielsweise das Anschließen eines Schalldämpfers ermöglichen.

Das Ventilglied 4 hat einen länglichen, sich in Achsrichtung der Längsachse 14 erstreckenden Hauptkörper 23. Dieser besteht beispielsweise aus einem starren Kunststoffmaterial oder aus Metall. Der Hauptkörper 23 erstreckt sich auch in dem mittleren Ventilkammerabschnitt 17a, wo er ein ebenfalls zum Ventilglied 4 gehörendes, als Dichtteller 24 bezeichnetes ringförmiges Dichtelement trägt. Der Dichtteller 24 besteht aus einem relativ harten, gleichwohl elastisch verformbaren Material, insbesondere aus einem Elastomermaterial. Der Dichtteller 24 ist dafür vorgesehen, abhängig von der Schaltstellung des Ventilgliedes 4 dichtend mit dem einen oder anderen der beiden Ventilsitze 15, 16 axial zusammenzuwirken, um wahlweise die eine oder die andere der beiden Überströmöffnungen 18, 19 fluiddicht zu verschließen.

Der Hauptkörper 23 hat eine radial nach außen orientierte periphere Außenumfangsfläche 25. Selbige kann, wie dies beim Ausführungsbeispiel der Fall ist, in der axialen Richtung des Ventilgliedes 4 einen abgestuften Verlauf haben.

Der Dichtteller 24 ist an dem sich in dem mittleren Ventilkammerabschnitt 17a erstreckenden Längenabschnitt des Hauptkörpers 23 fixiert. Auf diese Weise bilden der Hauptkörper 23 und der Dichtteller 24 eine Bewegungseinheit und führen die Schaltbewegung 5 einheitlich stets gemeinsam aus.

Der Dichtteller 24 überragt die Außenumfangsfläche 25 des Hauptkörpers 23 in der radialen Richtung. Dementsprechend steht er in der Umfangsrichtung der Längsachse 14 ringsum radial über den Hauptkörper 23 vor. An seinem bezüglich des Hauptkörpers 23 radial vorstehenden Abschnitt verfügt der Dichtteller 24 über zwei einander entgegengesetzt orientierte axiale Stirnflächen, die im Folgenden als erste axiale Stirnfläche 26 und als zweite axiale Stirnfläche 27 bezeichnet seien. Beide axiale Stirnflächen 26, 27 haben eine ringförmige Gestalt.

Die erste axiale Stirnfläche 26 des Dichttellers 24 liegt dem ersten ringförmigen Ventilsitz 15 gegenüber. Beide haben zumindest im Wesentlichen den gleichen Durchmesser. Die ringförmige zweite axiale Stirnfläche 27 des Dichttellers 24 liegt dem zweiten ringförmigen Ventilsitz 16 axial gegenüber und haben untereinander zweckmäßigerweise ebenfalls zumindest im Wesentlichen den gleichen Durchmesser. Bevorzugt sind auch die Durchmesser der beiden ringförmigen Ventilsitze 15, 16 untereinander gleichgroß.

Der axiale Abstand zwischen den beiden ringförmigen Ventilsitzen 15, 16 ist größer als die axiale Breite des Dichttellers 24 im Bereich seiner beiden axialen Stirnflächen 26, 27. Dementsprechend kann sich der Dichtteller 24 bei der Schaltbewegung 5 axial zwischen den beiden Ventilsitzen 15, 16 bewegen.

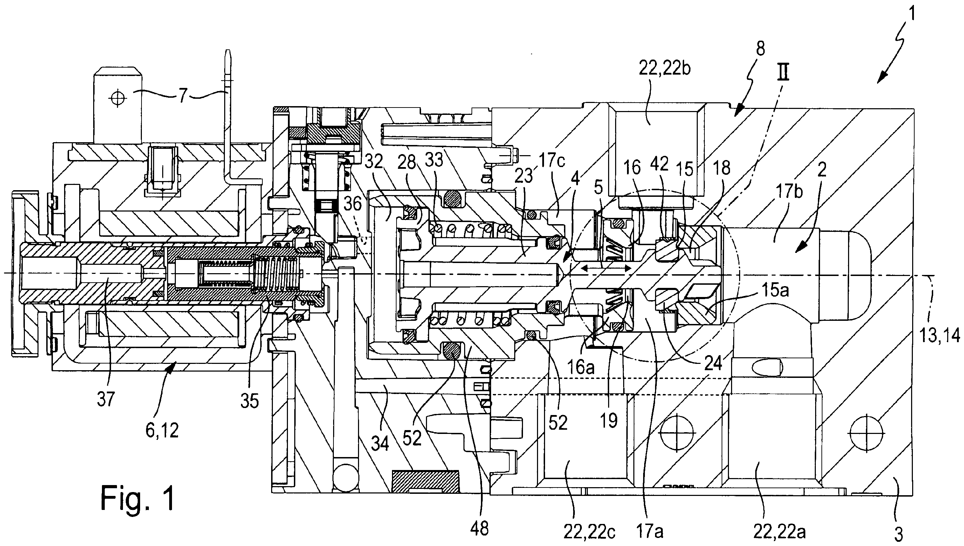

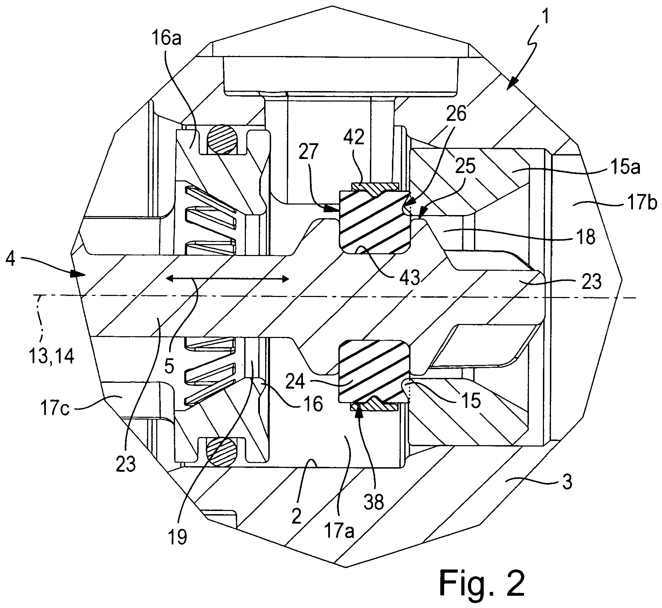

Im Rahmen der Schaltbewegung 5 kann das Ventilglied 4 eine aus Figuren 1 und 2 ersichtliche erste Schaltstellung einnehmen, in der der Dichtteller 24 mit seiner als eine Dichtfläche fungierenden ersten axialen Stirnfläche 26 unter Abdichtung mit einer ringförmigen Kontaktfläche an dem bezüglich des Ventilgehäuses 3 ortsfesten ersten ringförmigen Ventilsitz 15 anliegt. Da der Dichtteller 24 aus einem elastisch nachgiebigen Material besteht, kann der bevorzugt kragenförmig axial erhaben ausgebildete erste Ventilsitz 15 in der in Figur 2 illustrierten Weise im Bereich der ersten axialen Stirnfläche 26 in den Dichtteller 24 eindrücken und dessen Material verformen. Auf diese Weise ist ein inniger Dichtkontakt gegeben. In dieser bezüglich des ersten Ventilsitzes 15 eingenommenen Schließstellung des Dichttellers 24 ist die erste Überströmöffnung 18 abgesperrt und folglich ein Fluidübertritt zwischen dem ersten äußeren Ventilkammerabschnitt 17b und dem mittleren Ventilkammerabschnitt 17a verhindert.

Da der Dichtteller 24 in dieser ersten Schaltstellung vom zweiten Ventilsitz 16 abgehoben ist, ist die zweite Überströmöffnung 19 freigegeben, sodass ein Fluidübertritt zwischen dem mittleren Ventilkammerabschnitt 17a und dem zweiten äußeren Ventilkammerabschnitt 17c möglich ist.

Ausgehend von der ersten Schaltstellung gemäß Figuren 1 und 2 kann der Dichtteller 24 im Rahmen der Schaltbewegung 5 in eine zweite Schaltstellung bewegt werden, in der der Dichtteller 24 von dem ersten Ventilsitz 15 abgehoben ist und mit seiner als eine Dichtfläche fungierenden zweiten axialen Stirnfläche 27 mit einem ringförmigen Dichtkontakt an dem ihr gegenüberliegenden zweiten ringförmigen Ventilsitz 16 anliegt. In dieser bezüglich des zweiten Ventilsitzes 16 eingenommenen Schließstellung des Dichttellers 24 ist die zweite Überströmöffnung 19 abgesperrt und stattdessen die erste Überströmöffnung 18 offen. Folglich ist ein Fluidübertritt zwischen dem ersten äußeren Ventilkammerabschnitt 17b und dem mittleren Ventilkammerabschnitt 17a möglich, während gleichzeitig ein Fluidübertritt zwischen dem mittleren Ventilkammerabschnitt 17a und dem zweiten äußeren Ventilkammerabschnitt 17c verhindert ist.

Basierend auf der oben erwähnten Nutzung beziehungsweise Ausgestaltung der Ventilkanäle 22 kann das Mehrwegeventil 1 folglich als ein 3/2-Wegeventil arbeiten, das den Arbeitskanal 22b in der ersten Schaltstellung von dem Speisekanal 22a abtrennt und mit dem Arbeitskanal 22b verbindet und das den Arbeitskanal 22b in der zweiten Schaltstellung mit dem Speisekanal 22a verbindet und gleichzeitig von dem Entlastungskanal 22c abtrennt. Dementsprechend kann ein an den Arbeitskanal 22b angeschlossener Verbraucher wahlweise mit Druckmedium aus dem Speisekanal 22a versorgt werden oder aber zu dem Entlastungskanal 22c hin druckmäßig entlastet werden.

Bei einem nicht illustrierten Aufbau ist das Mehrwegeventil 1 als 2/2-Wegeventil konzipiert. In diesem Fall fehlen der zweite Ventilsitz 16 und der Entlastungskanal 22c. Hier fungiert dann der Dichtteller 24 als Absperrglied, das einen an den Arbeitskanal 22b angeschlossenen Verbraucher alternativ mit dem Speisekanal 22a verbinden oder von dem Speisekanal 22a abtrennen kann.

Die zum Hervorrufen der Schaltbewegung 5 erforderliche Antriebskraft wird bei dem Ventilglied 4 beim Ausführungsbeispiel durch Fluidbeaufschlagung eines zum Ventilglied 4 gehörenden Antriebskolbens 28 hervorgerufen. Exemplarisch ist dieser Antriebskolben 28 von einem axialen Endabschnitt des Hauptkörpers 23 gebildet, der sich auf der dem zweiten Ventilsitz 16 axial entgegengesetzten Seite des zweiten äußeren Ventilkammerabschnittes 17c befindet und der einen als Antriebskammer 32 fungierenden Längenabschnitt der Ventilkammer 2 begrenzt. Alternativ kann der Antriebskolben 28 auch ein bezüglich des Hauptkörpers 23 gesonderter Bestandteil des Ventilgliedes 4 sein. Außerdem kann das Ventilglied 4 an seiner Stelle auch mit einer Antriebsmembran ausgestattet sein.

Die Antriebskammer 32 ist unter Vermittlung der Vorsteuerventileinrichtung 12 alternativ mit einem Antriebsfluid beaufschlagbar oder druckmäßig entlastbar. Der in der Antriebskammer 32 momentan herrschende Druck beaufschlagt auch den Antriebskolben 28 und ruft eine mehr oder weniger große Stellkraft hervor. Exemplarisch bewegt sich somit das Ventilglied 4 in die erste Schaltstellung, wenn die Antriebskammer 32 mit einem Antriebsfluid beaufschlagt ist. Eine Druckentlastung der Antriebskammer 32 hat den Effekt, dass das Ventilglied 4 aufgrund einer es beaufschlagenden Rückstellfedereinrichtung 33 unter Verringerung des Volumens der Antriebskammer 32 in die erste Schaltstellung verschoben wird.

Das zur Betätigung des Ventilgliedes 4 erforderliche Antriebsfluid wird beim Ausführungsbeispiel über einen internen Vorsteuer-Speisekanal 35 aus dem Speisekanal 22a abgezweigt und der Vorsteuerventileinrichtung 12 zugeführt. Eine externe Zufuhr des Antriebsfluides ist aber ebenfalls möglich. Die Vorsteuerventileinrichtung 12 hat ein bewegliches Vorsteuerventilglied 35, das bei entsprechendem Betriebszustand der Vorsteuerventileinrichtung 12 eine Fluidverbindung zwischen dem Vorsteuer-Speisekanal 34 und einem in die Antriebskammer 32 einmündenden Vorsteuer-Arbeitskanal 36 freigibt. Nimmt das Vorsteuerventilglied 35 eine den Vorsteuer-Speisekanal 34 absperrende Stellung ein, liegt gleichzeitig eine Fluidverbindung zwischen dem Vorsteuer-Arbeitskanal 36 und einem Vorsteuer-Entlüftungskanal 37 vor, sodass die Druckentlastung der Antriebskammer 32 bewirkt wird.

Die Vorsteuerventileinrichtung 12 ist zweckmäßigerweise eine Magnetventileinrichtung oder eine Piezoventileinrichtung.

Wenn das Ventilglied 4 die in Figur 2 vergrößert abgebildete erste Schaltstellung einnimmt, ist der mittlere Ventilkammerabschnitt 17a aufgrund seiner offenen Verbindung zum Entlastungskanal 22c zumindest annähernd drucklos. Gleichzeitig steht aber in dem vom mittleren Ventilkammerabschnitt 17a abgetrennten ersten äußeren Ventilkammerabschnitt 17b aufgrund dessen Verbindung zum Speisekanal 22a ein relativ hoher Druck an. Die erforderliche Schließkraft wird dabei im Falle des Ausführungsbeispiels durch das in der Antriebskammer 32 anstehende Antriebsfluid aufgebracht.

In der vorstehend beschriebenen Schließstellung ist der Dichtteller 24 einer sehr hohen axialen fluidischen Druckdifferenz ausgesetzt. Daraus resultiert die Tendenz, dass der Dichtteller 24 verformt wird und zumindest partiell vom ersten ringförmigen Ventilsitz 15 und/oder von dem ihn tragenden Hauptkörper 23 abhebt. Dies kann eine Leckage beziehungsweise einen unerwünschten Fluidübertritt zwischen dem ersten äußeren Ventilkammerabschnitt 17b und dem mittleren Ventilkammerabschnitt 17a zur Folge haben. Bei dem abgebildeten Mehrwegeventil 1 ist diese Problematik jedoch zumindest weitestgehend ausgeräumt, weil der Dichtteller 24 an seiner radialen Außenumfangsfläche 38 koaxial von einem zumindest in seiner Umfangsrichtung zugfesten, den Dichtteller 24 radial abstützenden Stützring 42 umschlossen ist. Der Stützring 42 liegt radial außen an dem Dichtteller 24 an und begrenzt die Verformbarkeit des elastischen Dichttellers 24. Dabei ist der Stützring 42 ausschließlich an dem Dichtteller 24 befestigt und hat keinen Kontakt zu dem Hauptkörper 23. Bei der erwähnten Umfangsrichtung des Stützrings 42 handelt es sich um die Richtung rings um die Längsachse des Stützringes 42 beziehungsweise des Dichttellers 24 herum.

Der Stützring 42 umschließt einen Querschnitt, der durch die im Betrieb des Mehrwegeventils 1 auf den Stützring 42 einwirkenden Kräfte nicht aufweitbar ist. Infolgedessen begrenzt der Stützring 42 die radiale Verformbarkeit des von ihm umschlossenen Dichttellers 24, der mithin in seiner Position am Hauptkörper 23 stabilisiert ist und sich selbst aufgrund der an ihm angreifenden Druckdifferenz nicht so verformt, dass eine Leckage auftritt. Der Stützring 42 wirkt quasi wie ein Gurt.

Wenngleich es möglich wäre, den Stützring 42 so auszubilden, dass er quer zu seiner Umfangsrichtung flexibel ist, wird es als besonders vorteilhaft angesehen, den Stützring 42 so auszubilden, dass er eine insgesamt starre Struktur hat. Dies erreicht man selbst bei einer geringen Materialstärke unter Verwendung eines Materials geeigneter Festigkeit, beispielsweise Stahl oder Aluminiummaterial.

Bevorzugt ist der Stützring 42, was die Länge und Dicke seines Ringkörpers anbelangt, vergleichbar einer Hülse gestaltet. So hat er insbesondere eine im Vergleich zur Wanddicke mehrfache axiale Länge. Man kann sich eine bevorzugte Ausgestaltung des Stützringes 42 auch entstanden denken aus einem zu einem Ring geformten schmalen Streifenkörper.

Der Dichtteller 24 ist zweckmäßigerweise durch die Kombination eines Kraftschlusses und eines Formschlusses am Hauptkörper 23 befestigt. Exemplarisch ist dies dadurch realisiert, dass der Hauptkörper 23 an seinem Außenumfang eine nach radial außen hin offene Ringnut 43 aufweist, in die der Dichtteller 24 konzentrisch eingesetzt ist, sodass er mit seinem radial innen liegenden Abschnitt in der Ringnut 43 aufgenommen ist. Der radial aus der Ringnut 43 herausragende radial äußere Abschnitt des Dichttellers 24 weist die schon erwähnten axialen Stirnflächen 26, 27 auf, die durch Zusammenwirken mit einem ringförmigen Ventilsitz 15, 16 als Dichtflächen fungieren.

Durch den Stützring 42 wird der ringförmige Dichtteller 24 ungeachtet der an ihm angreifenden Druckdifferenz sicher in der Ringnut 43 festgehalten. Es ist insbesondere die Gefahr reduziert, dass sich der Dichtteller 24 verformt und Druckmedium aus dem ersten äußeren Ventilkammerabschnitt 17b in die Ringnut 43 eindringt und den Dichtteller 24 unterwandert.

Der Ringkörper des Dichttellers 24 wird erfindungsgemäß mit einer blockförmigen Querschnittsform realisiert, wie dies in den Abbildungen zum Ausdruck kommt. Der Ringkörper hat eine rechteckige und insbesondere quadratische Querschnittsform, die an den Eckbereichen, insbesondere innerhalb der Ringnut 43, abgerundet sein kann.

Vorzugsweise ist der Stützring 42 zumindest in axialer Richtung formschlüssig am Dichtteller 24 fixiert. Vorteilhaft ist es, wenn die formschlüssige Verbindung mit einer kraftschlüssigen Verbindung kombiniert ist, was auf das Ausführungsbeispiel zutrifft.

Exemplarisch ist der Stützring 42 mittels einer Rastverbindung an dem Dichtteller 24 fixiert. Der Dichtteller 24 weist an seiner radialen Außenumfangsfläche 38, die zweckmäßigerweise zumindest im Wesentlichen zylindrisch geformt ist, eine zum Dichtteller 24 konzentrische und nach radial außen hin offene ringförmige Haltenut 44 auf. Die Haltenut 44 befindet sich bevorzugt in einem axial mittigen Bereich der radialen Außenumfangsfläche 38, sodass sie axial beidseits von einem kreiszylindrischen Umfangsflächenabschnitt der radialen Außenumfangsfläche 38 flankiert ist.

Der Stützring 42 weist an seinem radialen Innenumfang einen zu dem Stützring 42 konzentrischen ringförmigen Haltevorsprung 45 auf, der formschlüssig in die Haltenut 44 des Dichttellers 24 von radial außen her eingreift. Durch das Zusammenwirken der Seitenflächen des Haltevorsprunges 45 mit den Nutflanken der Haltenut 44 ist der Stützring 42 axial formschlüssig auf dem Dichtteller 24 fixiert. Montiert wird der Stützring 42 auf dem Dichtteller 24 durch axiales Aufschieben, wobei das Material des Dichttellers 24 lokal elastisch verformt wird, bis schließlich der Haltevorsprung 45 in die Haltenut 44 einschnappt beziehungsweise einrastet.

Zweckmäßigerweise sind die diametralen Außenabmessungen des ringförmigen Dichttellers 24 und die diametralen Innenabmessungen des Stützringes 42 so aufeinander abgestimmt, dass diese beiden Komponenten in der radialen Richtung der jeweiligen Ringstruktur miteinander verspannt sind. Auf diese Weise ergibt sich eine kraftschlüssige Komponente des Zusammenhalts zwischen dem Stützring 42 und dem Dichtteller 24.

Der Stützring 42 hat zweckmäßigerweise zwei einander entgegengesetzte axiale Endabschnitte 42a, 42b, die sich axial beidseits an den Haltevorsprung 45 anschießen. Jeder dieser axialen Endabschnitte 42a, 42b definiert zweckmäßigerweise an seinem Innenumfang eine kreiszylindrische Innenumfangsfläche, die axial benachbart zur Haltenut 44 an dem dort ebenfalls kreiszylindrischen Abschnitt der radialen Außenumfangsfläche 38 des Dichttellers 42 anliegt.

Der Zusammenbau der sich aus dem Dichtteller 24 und dem Stützring 42 zusammensetzenden Dichtungsbaugruppe 47 ist besonders einfach, wenn der am Stützring 42 angeordnete Haltevorsprung 45 ein sich zu seinem radialen freien Endbereich hin verjüngendes Querschnittsprofil hat, das zweckmäßigerweise auch abgerundet ist. Die Haltenut 44 ist in Verbindung damit zweckmäßigerweise mit einem sich zum Nutgrund hin verjüngenden Querschnittsprofil versehen und hat zweckmäßigerweise ebenfalls eine abgerundete Kontur. Mit dieser Gestaltung ist auch eine einfache und kostengünstige Herstellung verbunden, weil sich entsprechende Konturen bei der Spritzgießherstellung und Formpressherstellung sehr einfach entformen lassen.

Vorteilhaft ist es jedenfalls, wenn der Haltevorsprung 45 und die Haltenut 44 komplementär zueinander ausgebildet sind, sodass die Haltenut 44 im montierten Zustand des Stützringes 42 von dem Haltevorsprung 45 vollständig ausgefüllt ist.

Es besteht die nicht zur Erfindung gehörige Möglichkeit, den Haltevorsprung 45 radial vorstehend an der radialen Außenumfangsfläche 38 des Dichttellers 24 anzuordnen und den Stützring 42 mit einer damit zusammenwirkenden Haltenut 44 zu versehen. Die beim Ausführungsbeispiel realisierte erfindungsgemäße Bauform ist jedoch vorzuziehen, weil der Dichtteller 24 über wesentlich größere radiale Abmessungen als der Stützring 42 verfügt, sodass von Hause aus genügend Platz zur Verfügung steht, um eine Haltenut 44 zu integrieren.

Während beim Ausführungsbeispiel der Stützring 42 nur mit einem Teil seines Querschnittes, nämlich mit dem auf den Haltevorsprung 45 entfallenden Querschnittsanteil, radial versenkt im Dichtteller 24 zu liegen kommt, ist der Stützring 42 bei einem nicht illustrierten Ausführungsbeispiel mit seinem gesamten Querschnitt radial versenkt in den Dichtteller 24 eingebettet.

Das Ausführungsbeispiel verdeutlicht, dass es vorteilhaft ist, den Stützring 42 ausschließlich im Bereich der radialen Außenumfangsfläche 38 des Dichttellers 24 zu befestigen. Dies bietet die vorteilhafte Möglichkeit, für den Stützring 42 eine Gestaltung zu wählen, bei der er den Dichtteller 24 axial an keiner seiner beiden Stirnseiten überragt. Besonders vorteilhaft ist es in diesem Zusammenhang, wenn der Stützring 42 eine axiale Länge hat, die geringer ist als die axiale Länge des Dichttellers 24 zwischen seinen beiden axialen Stirnflächen 26, 27, wobei der Stützring 42 dazuhin bevorzugt so platziert ist, dass er an beiden axialen Stirnseiten von dem Dichtteller 24 überragt wird.

Die Figur 2 verdeutlicht, dass der erste ringförmige Ventilsitz 15 aufgrund dessen, dass er bezüglich radial benachbarter Bereiche axial vorsteht, in den die zugeordnete Schließstellung einnehmenden Dichtteller 24 axial eindrückt. Dieses Eindrücken begünstigt die gewünschte fluiddichte Abdichtung zwischen dem ersten Ventilsitz 15 und dem Dichtteller. Dadurch, dass der Stützring 42 bezüglich der ersten axialen Stirnfläche 26 zurückversetzt endet, kann der erste Ventilsitz 15 in das Material des Dichttellers 24 eindrücken, ohne durch den aus einem härteren Material bestehenden Stützring 42 behindert zu werden.

Entsprechendes gilt für die Konstellation auf der axial entgegengesetzten Seite des Dichttellers 24.

Dadurch, dass der Stützring 42 den Dichtteller 24 zumindest an derjenigen axialen Stirnfläche 26, 27 nicht bedeckt, die mit einem der Ventilsitze 15, 16 kooperiert, besteht überdies die vorteilhafte Möglichkeit, für den betreffenden Ventilsitz 15, 16 eine optimale Kontur auszuwählen.

Bevorzugt sind die ringförmigen Ventilsitze 15, 16 Bestandteile jeweils eines bezüglich des Ventilgehäuses 3 gesonderten, im Querschnitt ringförmigen Ventilsitzkörpers 15a, 16a. Jeder Ventilsitzkörper 15a, 16a ist bezüglich des Ventilgehäuses 3 unbeweglich befestigt und weist einen der beiden ringförmigen Ventilsitze 15, 16 auf. Exemplarisch ist der den ersten ringförmigen Ventilsitz 15 aufweisende Ventilsitzkörper 15a ein im Presssitz in der Ventilkammer 2 befestigter Ringkörper. Hier bedarf es somit keiner zusätzlichen weichelastischen Dichtmittel zwischen dem Ventilsitzkörper 15a und dem Ventilgehäuse 3 zur gegenseitigen Abdichtung.

Der den zweiten ringförmigen Ventilsitz 16 aufweisende Ventilsitzkörper 16a ist beim Ausführungsbeispiel Bestandteil einer Führungspatrone 48, die in die Ventilkammer 2 koaxial eingesetzt ist und in der das Ventilglied 4 mit seinem Hauptkörper 23 axial verschiebbar geführt ist. Hier ist es zweckmäßig, eine weichelastische Dichtungsanordnung 52 koaxial zwischen der Führungspatrone 48 und dem Ventilgehäuse 3 vorzusehen.

Wenigstens einer und bevorzugt jeder der beiden ringförmigen Ventilsitze 15, 16 kann alternativ auch einstückig mit dem Ventilgehäuse ausgebildet sein.

## Patentansprüche

1. Mehrwegeventil, mit einem Ventilgehäuse (3), in dem eine Ventilkammer (2) ausgebildet ist, in der ein Ventilglied (4) unter Ausführung einer Schaltbewegung (5) axial bewegbar angeordnet ist, das über einen eine periphere Außenumfangsfläche (25) aufweisenden Hauptkörper (23) verfügt, der mindestens einen elastisch verformbaren, bezüglich der Außenumfangsfläche (25) radial vorstehenden ringförmigen Dichtteller (24) trägt, der zwei einander entgegengesetzte axiale Stirnflächen (26, 27) aufweist, wobei wenigstens einer dieser axialen Stirnflächen (26, 27) ein bezüglich des Ventilgehäuses (3) abgestützter ringförmiger Ventilsitz (15, 16) axial gegenüberliegt, der eine zwei Ventilkammerabschnitte (17a, 17b; 17a, 17c) der Ventilkammer (2) verbindende Überströmöffnung (18, 19) umrahmt und an dem der Dichtteller (24) unter Einnahme einer die Überströmöffnung (18, 19) absperrenden Schließstellung mit einer seiner beiden Stirnflächen (26, 27) anliegen kann, wobei der Dichtteller (24) an seiner radialen Außenumfangsfläche (38) koaxial von einem die Verformung des Dichttellers (24) begrenzenden Stützring (42) umschlossen ist, der ausschließlich an dem Dichtteller (24) fixiert ist, **dadurch gekennzeichnet, dass** der Ringkörper des Dichttellers (24) im Querschnitt betrachtet eine blockförmige Gestalt mit rechteckiger Querschnittsprofilierung aufweist, wobei an der radialen Außenumfangsfläche (38) des Dichttellers (24) mindestens eine ringförmige Haltenut (44) ausgebildet ist, in die ein am Stützring (42) ausgebildeter ringförmiger Haltevorsprung (45) formschlüssig eingreift.

2. Mehrwegeventil nach Anspruch 1, **dadurch gekennzeichnet, dass** der Stützring (42) in sich starr ausgebildet ist.

3. Mehrwegeventil nach Anspruch 1 oder 2, **dadurch gekennzeichnet, dass** der auf der Seite des Dichttellers (24) liegende Ventilkammerabschnitt (17a) mit einem mit einem Verbraucher verbindbaren Arbeitskanal (22b) kommuniziert, während der auf der axial entgegengesetzten Seite liegende Ventilkammerabschnitt (17b) mit einem mit einer Druckquelle verbindbaren Speisekanal (22a) kommuniziert.

4. Mehrwegeventil nach einem der Ansprüche 1 bis 3, **dadurch gekennzeichnet, dass** der Dichtteller (24) axial beweglich zwischen zwei ihm jeweils axial zugewandten ringförmigen Ventilsitzen (15, 16) angeordnet ist, die jeweils eine Überströmöffnung (18, 19) umrahmen, die einen mittleren Ventilkammerabschnitt (17a) der Ventilkammer (2), in dem sich der Dichtteller (24) befindet, mit einem von zwei äußeren Ventilkammerabschnitten (17b, 17c) verbindet, wobei der Dichtteller (24) im Rahmen der Schaltbewegung (5) abwechselnd in jeweils einer von zwei Schließstellungen positionierbar ist, in der er unter Absperrung der zugeordneten Überströmöffnung (18, 19) an einem der ringförmigen Ventilsitze (15, 16) anliegt und gleichzeitig die jeweils andere Überströmöffnung (19, 18) freigibt.

5. Mehrwegeventil nach Anspruch 4, **dadurch gekennzeichnet, dass** der mittlere Ventilkammerabschnitt (17a) mit einem mit einem Verbraucher verbindbaren Arbeitskanal (22b) kommuniziert, während von den beiden äußeren Ventilkammerabschnitten (17b, 17c) der eine Ventilkammerabschnitt (17b) mit einem mit einer Druckquelle verbindbaren Speisekanal (22a) und der andere Ventilkammerabschnitt (17c) mit einem mit einer Drucksenke verbundenen Entlastungskanal (22c) kommuniziert.

6. Mehrwegeventil nach einem der Ansprüche 1 bis 5, **dadurch gekennzeichnet, dass** der Dichtteller (24) in einer nach radial außen hin offenen Ringnut (43) des Hauptkörpers (23) gehalten ist.

7. Mehrwegeventil nach einem der Ansprüche 1 bis 6, **dadurch gekennzeichnet, dass** der Stützring (42) so ausgebildet und angeordnet ist, dass er keine der beiden axialen Stirnflächen (26, 27) des Dichttellers (24) bedeckt.

8. Mehrwegeventil nach einem der Ansprüche 1 bis 7, **dadurch gekennzeichnet, dass** der Stützring (42) den Dichtteller (24) an keiner seiner beiden axialen Stirnflächen (26, 27) überragt.

9. Mehrwegeventil nach einem der Ansprüche 1 bis 8, **dadurch gekennzeichnet, dass** der Stützring (42) axial kürzer ist als der Dichtteller (24) in zumindest seinem radial außen liegenden Bereich, wobei der Stützring (42) derart auf dem Dichtteller (24) angeordnet ist, dass er an beiden axialen Stirnseiten von dem Dichtteller (24) überragt wird.

10. Mehrwegeventil nach einem der Ansprüche 1 bis 9, **dadurch gekennzeichnet, dass** der Stützring (42) ausschließlich im Bereich der radialen Außenumfangsfläche (38) des Dichttellers (24) an dem Dichtteller (24) befestigt ist.

11. Mehrwegeventil nach einem der Ansprüche 1 bis 10, **dadurch gekennzeichnet, dass** der Stützring (42) in axialer Richtung formschlüssig an dem Dichtteller (24) fixiert ist, wobei er zweckmäßigerweise zusätzlich auch noch kraftschlüssig an dem Dichtteller (24) fixiert ist.

12. Mehrwegeventil nach einem der Ansprüche 1 bis 11, **dadurch gekennzeichnet, dass** der Stützring (42) mittels einer Rastverbindung an dem Dichtteller (24) fixiert ist.

13. Mehrwegeventil nach einem der Ansprüche 1 bis 12, **dadurch gekennzeichnet, dass** die Haltenut (44) ein sich zum Nutgrund hin verjüngendes Querschnittsprofil hat und der Haltevorsprung (45) ein sich zu seinem radialen freien Endbereich hin verjüngendes Querschnittsprofil hat, wobei die beiden Querschnittsprofile zweckmäßigerweise eine abgerundete Kontur haben und/oder komplementär zueinander ausgebildet sind.

## Claims

1. Multiway valve with a valve housing (3), in which is formed a valve chamber (2), in which a valve member (4) capable of axial movement while performing a switching movement is located, which valve member has a main body (23) having a peripheral outer circumferential surface (25) and supporting at least one annular sealing plate (24), which projects radially relative to the outer circumferential surface (25) and has two axial end faces (26, 27) opposite each other, wherein axially opposite at least one of these axial end faces (26, 27), there is located an annular valve seat (15, 16), which is supported relative to the valve housing (3) and frames an overflow opening (18, 19) connecting two valve chamber sections (17a, 17b; 17a, 17c) of the valve chamber (2) and against which the sealing plate (24) can bear with one of its two end faces (26, 27) while adopting a closed position blocking the overflow opening (18, 19), wherein the sealing plate (24) is at its radial outer circumferential surface (38) coaxially enclosed by a supporting ring (42), which limits the deformation of the sealing plate (24) and is exclusively fixed to the sealing plate (24), **characterised in that**, as viewed in cross-section, the annular body of the sealing plate (24) has a block shape with a rectangular cross-sectional profiling, wherein at the radial outer circumferential surface (38) of the sealing plate (24) there is formed at least one annular holding groove (44), with which an annular holding projection (45) formed on the supporting ring (42) engages positively.

2. Multiway valve according to claim 1, **characterised in that** the supporting ring (42) is designed to be intrinsically rigid.

3. Multiway valve according to claim 1 or 2, **characterised in that** the valve chamber section (17a) located on the side of the sealing plate (24) communicates with an operating passage (22b) connectable to a user, while the valve chamber section (17b) located on the axially opposite side communicates with a feed passage (22a) connectable to a pressure source.

4. Multiway valve according to any of claims 1 to 3, **characterised in that** the sealing plate (24) is located in an axially movable manner between two axially facing annular valve seats (15, 16), each of which frames an overflow opening (18, 19), which connects a central valve chamber section (17a), in which the sealing plate (24) is located, to one of two outer valve chamber sections (17b, 17c), wherein the sealing plate (24) can alternatively be positioned within the switching movement (5) in one of two closed positions, in which it bears against one of the two annular valve seats (15, 16) while blocking the associated overflow opening (18, 19) and simultaneously uncovering the respective other overflow opening (19, 18).

5. Multiway valve according to claim 4, **characterised in that** the central valve chamber section (17a) communicates with an operating passage (22b) connectable to a user, while of the two outer valve chamber sections (17b, 17c) the one valve chamber section (17b) communicates with a feed passage (22a) connectable to a pressure source and the other valve chamber section (17c) communicates with a relief passage (22c) connected to a pressure sink.

6. Multiway valve according to any of claims 1 to 5, **characterised in that** the sealing plate (24) is held in an annular groove (43) of the main body (23) which is radially open towards the outside.

7. Multiway valve according to any of claims 1 to 6, **characterised in that** the supporting ring (42) is designed and arranged such that it covers neither of the two axial end faces (26, 27) of the sealing plate (24).

8. Multiway valve according to any of claims 1 to 7, **characterised in that** the supporting ring (42) projects beyond the sealing plate (24) at neither of its two axial end faces (26, 27).

9. Multiway valve according to any of claims 1 to 8, **characterised in that** the supporting ring (42) is axially shorter than the sealing plate (24) at least in its radially outer region, wherein the supporting ring (42) is arranged on the sealing plate (24) in such a way that the sealing plate (24) projects beyond it at both axial end faces.

10. Multiway valve according to any of claims 1 to 9, **characterised in that** the supporting ring (42) is exclusively attached to the sealing plate (24) in the region of the radial circumferential surface (38).

11. Multiway valve according to any of claims 1 to 10, **characterised in that** the supporting ring (42) is positively fixed to the sealing plate (24) in the axial direction, being expediently fixed non-positively to the sealing plate (24) as well.

12. Multiway valve according to any of claims 1 to 11, **characterised in that** the supporting ring (42) is fixed to the sealing plate (24) by means of a latching connection.

13. Multiway valve according to any of claims 1 to 12, **characterised in that** the holding groove (44) has a cross-sectional profile which tapers towards the base of the groove and the holding projection (45) has a cross-sectional profile which tapers towards its radial free end region, the cross-sectional profiles expediently having a rounded contour and/or being designed to complement each other.

## Revendications

1. Vanne à plusieurs voies, avec un carter de vanne (3), dans lequel une chambre de vanne (2) est réalisée, dans laquelle un organe de vanne (4) est disposé de manière à pouvoir être déplacé axialement en exécutant un déplacement de commutation (5), qui dispose d'un corps principal (23) présentant une face de contour extérieur périphérique (25), qui supporte au moins disque d'étanchéité (24) de forme annulaire pouvant être déformé élastiquement, faisant saillie radialement par rapport à la face de contour extérieur (25), qui présente deux faces frontales (26, 27) axiales opposées l'une par rapport à l'autre, dans laquelle au moins un siège de vanne (15, 16) annulaire en appui par rapport au carter de vanne (3) fait face de manière axiale au moins à une desdites faces frontales (26, 27) axiales, qui encadre une ouverture de trop-plein (18, 19) reliant deux sections de chambre de vanne (17a, 17b ; 17a, 17c) de la chambre de vanne (2) et peut reposer par une de ses deux faces frontales (26, 27) au niveau du disque d'étanchéité (24) en adoptant une position de fermeture obstruant l'ouverture de trop-plein (18, 19), dans laquelle le disque d'étanchéité (24) est entouré au niveau de sa face de contour extérieur (38) radiale de manière coaxiale par une bague de soutien (42) limitant la déformation du disque d'étanchéité (24), qui est bloquée exclusivement au niveau du disque d'étanchéité (24), **caractérisée en ce que** le corps annulaire du disque d'étanchéité (24) présente, vu sur la coupe transversale, une configuration en forme de bloc avec un profilage de section transversale rectangulaire, dans laquelle au moins une rainure de maintien (44) annulaire est réalisée au niveau de la face de contour extérieur (38) radiale du disque d'étanchéité (24), dans laquelle une saillie de maintien (45) annulaire réalisée au niveau de la bague de soutien (42) vient en prise par complémentarité de forme.

2. Vanne à plusieurs voies selon la revendication 1, **caractérisée en ce que** la bague de soutien (42) est réalisée en soi de manière rigide.

3. Vanne à plusieurs voies selon la revendication 1 ou 2, **caractérisée en ce que** la section de chambre de vanne (17a) située sur le côté du disque d'étanchéité (24) communique avec un canal de travail (22b) pouvant être relié à un consommateur, tandis que la section de chambre de soupape (17b) située sur le côté axialement opposé communique avec un canal d'alimentation (22a) pouvant être relié à une source de pression.

4. Vanne à plusieurs voies selon l'une quelconque des revendications 1 à 3, **caractérisée en ce que** le disque d'étanchéité (24) est disposé de manière mobile axialement entre deux sièges de vanne (15, 16) annulaires tournés respectivement de manière axiale vers celui-ci, qui encadrent respectivement une ouverture de trop-plein (18, 19), qui relie une section de chambre de vanne centrale (17a) de la chambre de vanne (2), dans laquelle se trouve le disque d'étanchéité (24), à une des deux sections de chambre de vanne extérieures (17b, 17c), dans laquelle le disque d'étanchéité (24) peut être positionné dans le cadre du déplacement de commutation (5) en alternance dans respectivement une de deux positions de fermeture, dans laquelle il repose au niveau d'un des sièges de vanne (15, 16) annulaires en obstruant l'ouverture de trop-plein (18, 19) associée et débloque de manière simultanée l'autre ouverture de trop-plein (19, 18) respective.

5. Vanne à plusieurs voies selon la revendication 4, **caractérisée en ce que** la section de chambre de vanne centrale (17a) communique avec un canal de travail (22b) pouvant être relié à un consommateur, tandis que parmi les deux sections de chambre de vanne extérieures (17b, 17c), l'une section de chambre de vanne (17b) communique avec un canal d'alimentation (22a) pouvant être relié à une source de pression et l'autre section de chambre de vanne (17c) communique avec un canal de décharge (22c) relié à un réducteur de pression.

6. Vanne à plusieurs voies selon l'une quelconque des revendications 1 à 5, **caractérisée en ce que** le disque d'étanchéité (24) est maintenu dans une rainure annulaire (43) ouverte vers l'extérieur radialement du corps principal (23).

7. Vanne à plusieurs voies selon l'une quelconque des revendications 1 à 6, **caractérisée en ce que** la bague de soutien (42) est réalisée et disposée de telle sorte qu'elle ne recouvre aucune des deux faces frontales (26, 27) axiales du disque d'étanchéité (24).

8. Vanne à plusieurs voies selon l'une quelconque des revendications 1 à 7, **caractérisée en ce que** la bague de soutien (42) ne dépasse du disque d'étanchéité (24) au niveau d'aucune de ses deux faces frontales axiales (26, 27).

9. Vanne à plusieurs voies selon l'une quelconque des revendications 1 à 8, **caractérisée en ce que** la bague de soutien (42) est axialement plus courte que le disque d'étanchéité (24) dans au moins sa zone située radialement à l'extérieur, dans laquelle la bague de soutien (42) est disposée de telle manière sur le disque d'étanchéité (24) qu'elle est dépassée par le disque d'étanchéité (24) au niveau des deux côtés frontaux axiaux.

10. Vanne à plusieurs voies selon l'une quelconque des revendications 1 à 9, **caractérisée en ce que** la bague de soutien (42) est fixée exclusivement dans la zone de la face de contour extérieur (38) radiale du disque d'étanchéité (24) au niveau du disque d'étanchéité (24).

11. Vanne à plusieurs voies selon l'une quelconque des revendications 1 à 10, **caractérisée en ce que** la bague de soutien (42) est bloquée dans une direction axiale par complémentarité de forme au niveau du disque d'étanchéité (24), dans laquelle elle est bloquée de manière appropriée en outre également à force au niveau du disque d'étanchéité (24).

12. Vanne à plusieurs voies selon l'une quelconque des revendications 1 à 11, **caractérisée en ce que** la bague de soutien (42) est bloquée au niveau du disque d'étanchéité (24) au moyen d'un système de liaison par enclenchement.

13. Vanne à plusieurs voies selon l'une quelconque des revendications 1 à 12, **caractérisée en ce que** la rainure de maintien (44) a un profil de section transversale se rétrécissant en direction du fond de rainure et la saillie de maintien (45) a un profil de section transversale se rétrécissant en direction de sa zone d'extrémité libre radiale, dans laquelle de manière appropriée les deux profils de section transversale ont un contour arrondi et/ou sont réalisés de manière complémentaire l'un par rapport à l'autre.
